# EUROPEAN PATENT APPLICATION

(11) **EP 2 849 474 A1**
(43) Date of publication of application: **18.03.2015**
(21) Application number: 13787302.2
(22) Date of filing: 26.04.2013
(51) Int. Cl.: H04W 12/12

(54) **INFORMATION PROCESSING METHOD AND TERMINAL**

(30) Priority: 08.05.2012 CN 201210140213
(71) Applicant: Tencent Technology (Shenzhen) Company Limited, Guangdong 518044 (CN)
(72) Inventor: WANG, Qing, Shenzhen City Guangdong 518044 (CN); LUO, Zhanghu, Shenzhen City Guangdong 518044 (CN); HUANG, Zefeng, Shenzhen City Guangdong 518044 (CN); GUO, Haoran, Shenzhen City Guangdong 518044 (CN); XIAO,Quanhao, Shenzhen City Guangdong 518044 (CN); YUAN, Yixia, Shenzhen City Guangdong 518044 (CN); SONG, Jiashun, Shenzhen City Guangdong 518044 (CN); LI, Pengtao, Shenzhen City Guangdong 518044 (CN); DAI, Yunfeng, Shenzhen City Guangdong 518044 (CN); ZHAN, Xunchang, Shenzhen City Guangdong 518044 (CN); LIN, Chunyou, Shenzhen City Guangdong 518044 (CN)
(74) Representative: Mattsson, Niklas
(86) International application number: PCT/CN2013/074791
(87) International publication number: WO 2013/166922

(57) **Abstract**

Embodiments of the present disclosure provide a method and a terminal for processing information, belonging to computer technical field. The method includes: receiving information, wherein the information has at least a sender number and/or information contents; determining whether the information matches with one blocking mode of a combination of predefined blocking modes; and if the information matches with one blocking mode, processing the information according to a processing rule corresponding to the blocking mode. The present disclosure compares the sender number and/or information contents of the information with predefined blocking modes, which is not restricted to conventional blocking method in which merely numbers in a blacklist are blocked. The blocking accuracy ratio and efficiency are increased and the experience of the user is improved.

## Description

This application claims the benefit of Chinese Patent Application No. 201210140213.5, filed May 08, 2012, entitled "information processing method and terminal", the disclosure of which is incorporated herein in its entirety by reference.

### FIELD OF THE DISCLOSURE

The present disclosure relates to computer techniques, and more particularly, to a method and a terminal for processing information.

### BACKGROUND OF THE DISCLOSURE

With development of mobile communication techniques, mobile terminals become popular in people's daily life, followed by some bad effects, wherein propagation of spam information is most serious. Various advertisements are transmitted via short messages, multimedia messages and wappsuch information (this kind of information transmits a link of a website or a service to a cell phone supporting WAP PUSH function via short message), which interrupts normal working, studying or even rest of people. Previously, blocking of spam information can only be performed by operators. With utilization of smart terminals, information may also be processed based on some processing rules in the mobile terminals.

In an existing technique, the blocking of information is implemented by configuring a blacklist in the mobile terminal. A user adds a number into the blacklist. When the mobile terminal receives a piece of information, the sender number of the information is compared with the numbers in the blacklist. If the sender number matches with one number in the blacklist, the information is blocked. After the information is blocked, the information is specially saved or discarded without interrupting the user. If the sender number does not match with the blacklist, the information is unblocked. The user is prompted of the information and the information is displayed normally.

During the implementation of the present disclosure, the inventors of the present disclosure find the at least the following problem in the existing technique.

The blocking based on the blacklist can block merely known numbers. Sender numbers of current spam short messages are not fixed. Only after a new number transmits spam information, the new number can be added into the blacklist. The blocking accuracy ratio and efficiency cannot meet an ideal requirement.

### SUMMARY OF THE DISCLOSURE

Embodiments of the present disclosure provide a method and a terminal for processing information, so as to increase an information blocking efficiency.

According to an embodiment of the present disclosure, a method for processing contacts is provided. The method includes:
receiving information, wherein the information has at least a sender number and/or information contents;
determining whether the information matches with one blocking mode of a combination of predefined blocking modes; and
if the information matches with one blocking mode, processing the information according to a processing rule corresponding to the blocking mode.

The determining whether the information matches with one blocking mode of the combination of predefined blocking modes includes at least one of:
determining whether the sender number is in a locally-configured number set;
determining whether the information contents contain a keyword in a locally-configured keyword set;
determining whether the sender number is in a server-configured number set, and/or whether the information contents contain a keyword in a server-configured keyword set; and
determining whether the sender number is outside the locally-configured number set and the server-configured number set.

The determining whether the sender number is in the locally-configured number set includes:
determining whether the sender number is in a locally-configured blacklist and/or whitelist;
wherein a number in the blacklist and whitelist is a complete number added by a user, or an area configured by the user according to a number subscribed location, or a number segment added by the user; the blacklist is a list of numbers to be blocked, the whitelist is a list of numbers allowed to access.

The determining whether the sender number is in the locally-configured number set includes:
determining whether the sender number is a contact list saved locally or in a contact list saved in a subscriber identity module (SIM) card.

The determining whether the sender number is in the locally-configured number set includes:
determining whether the sender number is in an outgoing list locally saved.

The determining whether the information contents contain the keyword in the locally-configured keyword set includes:
if the information contents contain the keyword in the locally-configured keyword set, obtaining a weight of the keyword;
calculating a weight of the information according to a weight of the information contents;
if the weight of the information exceeds a predefined threshold, determining that the information matches with the predefined blocking mode.

The determining whether the sender number is in the server-configured number set, and/or whether the information contents contain the keyword in the server-configured keyword set includes:
if the sender number is in the server-configured number set, and/or the information contents contain a keyword in the server-configured keyword set, respectively obtaining a weight of the sender number and a weight of the keyword;
calculating a total weight of the information according to the weight of the sender number and a weight of the information contents; and
if the total weight exceeds a predefined threshold, determining that the information matches with the predefined blocking mode.

The processing the information according to the processing rule corresponding to the blocking mode includes:
if the processing rule corresponding to the blocking mode is block, blocking the information; and
if the processing rule corresponding to the blocking mode is unblock, displaying the information.

The determining whether the information matches with one blocking mode of the combination of predefined blocking modes includes:
comparing the information with the predefined blocking modes in the combination in turn according to a predefined order, until the information matches with one blocking mode or the information does not match with any one of the blocking modes.

According to another embodiment of the present disclosure, a terminal for processing contacts is provided. The terminal includes:
a receiving module, adapted to receive information, wherein the information has at least a sender number and/or information contents;
a determining module, adapted to determine whether the information matches with one blocking mode of a combination of predefined blocking modes; and
a processing module, adapted to process, if the information matches with one blocking mode, the information according to a processing rule corresponding to the blocking mode.

The determining module includes at least one of:
a first determining unit, adapted to determine whether the sender number is in a locally-configured number set;
a second determining unit, adapted to determine whether the information contents contain a keyword in a locally-configured keyword set;
a third determining unit, adapted to determine whether the sender number is in a server-configured number set, and/or whether the information contents contain a keyword in a server-configured keyword set; and
a fourth determining unit, adapted to determine whether the sender number is outside of the locally-configured number set and the server-configured number set.

The first determining unit includes:
a first determining sub-unit, adapted to determine whether the sender number is in a locally-configured blacklist and/or whitelist;
wherein a number in the blacklist and whitelist is a complete number added by a user, or an area configured by the user according to a number subscribed location, or a number segment added by the user; the blacklist is a list of number to be blocked, the whitelist is a list of numbers allowed to access.

The first determining unit includes:
a second determining sub-unit, adapted to determine whether the sender number is in a contact list saved in the terminal and/or a contact list saved in a subscriber identity module (SIM) card.

The first determining unit includes:
a third determining sub-unit, adapted to determine whether the sender number is in a locally saved outgoing list.

The second determining unit includes:
a fourth determining sub-unit, adapted to obtain, if the information contents contain a keyword in the locally-configured keyword set, a weight of the keyword;
a first calculating unit, adapted to calculate a weight of the information according to a weight of the information contents; and
a first determining unit, adapted to determine that the information matches with the predefined blocking mode if the weight of the information exceeds a predefined threshold.

The third determining unit includes:
a fifth determining sub-unit, adapted to respectively obtain, if the sender number is in the server-configured number set, and/or the information contents contain a keyword in the server-configured keyword set, a weight of the sender number and/or a weight of the keyword;
a second calculating unit, adapted to calculate a total weight of the information according to the weight of the sender number and a weight of the information contents; and
a second determining unit, adapted to determine that the information matches with the predefined blocking mode if the total weight exceeds a predefined threshold.

The processing module includes:
a first processing unit, adapted to block the information if the processing rule corresponding to the blocking mode is block; and
a second processing unit, adapted to display the information if the processing rule corresponding to the blocking mode is unblock.

The terminal further includes:
a third processing unit, adapted to compare the information with the predefined blocking modes in the combination in turn according to a predefined order, until the information matches with one blocking mode or the information does not match with any one of the blocking modes.

The technical solution provided by the present disclosure brings out the following advantages. Through comparing the sender number and information contents of the information with predefined blocking modes, the solution of the present disclosure is not restricted to conventional blocking manners in which merely numbers in the blacklist are blocked. The solution increases blocking accuracy ratio and efficiency, and also improves user's experience.

### BRIEF DESCRIPTION OF THE DRAWINGS

Figures used in the descriptions of the following embodiments are briefly introduced herein to make the technical solution of the present disclosure clearer. It should be noted that, the following figures are merely some embodiments. Those skilled in the art would get many variations according to these figures without an inventive work.
FIG. 1 is a flowchart illustrating a method for processing information according to a first embodiment of the present disclosure.
FIG. 2 is a flowchart illustrating a method for processing information according to a second embodiment of the present disclosure.
FIG. 3 is a schematic diagram illustrating a terminal for processing information according to a third embodiment of the present disclosure.
FIG. 4 is a schematic diagram illustrating a structure of a first determining unit according to the third embodiment of the present disclosure.
FIG. 5 is a schematic diagram illustrating a structure of a second determining unit according to the third embodiment of the present disclosure.
FIG. 6 is a schematic diagram illustrating a structure of a third determining unit according to the third embodiment of the present disclosure.

### DETAILED DESCRIPTION OF THE DISCLOSURE

The present disclosure is described in further detail hereinafter with reference to accompanying drawings and embodiments to make the technical solution and merits therein clearer.

### Embodiment 1

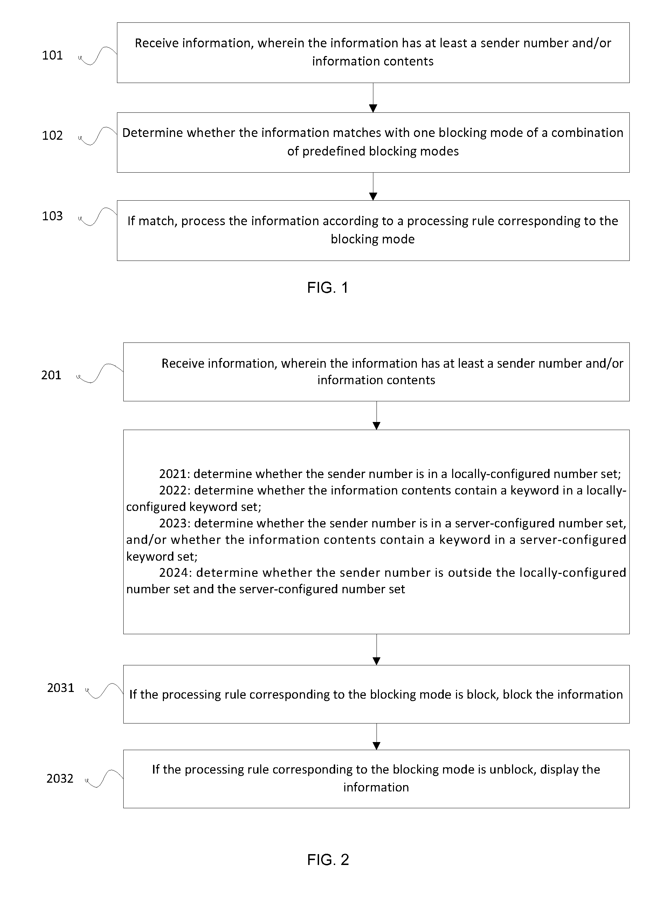

This embodiment provides a method for processing information, as shown in FIG. 1, the method includes the following.

At process 101, information is received, wherein the information has a sender number and/or information contents.

At process 102, it is determined whether the information matches with one blocking mode of a combination of predefined blocking modes.

At process 103, if the information matches with the blocking mode, the information is processed according to a processing rule corresponding to the blocking mode.

The embodiment of the present disclosure compares the sender number of the information and/or contents of the information with the predefined blocking modes, which is not limited to conventional blocking mode in which merely numbers in a blacklist are blocked. Blocking accuracy ratio and efficiency are increased and the user's experience is improved.

### Embodiment 2

FIG. 2 is a flowchart illustrating a method for processing information according to an embodiment of the present disclosure. As shown in FIG. 2, this embodiment is based on embodiment 1 and has some modifications.

At process 201, information is received, wherein the information has at least a sender number and/or information contents.

When receiving the information, a terminal obtains the sender number and contents of the information. In this embodiment, it is determined whether the information matches with a blocking processing rule according to the sender number and/or the information contents.

At process 202, it is determined whether the information matches with one blocking mode of a combination of predefined blocking modes.

The blocking modes preconfigured in the terminal may include: determining whether the sender number is in a locally-configured number set, and/or whether the sender number is in a server-configured number set, and/or determining whether the information contents contain a keyword in a locally-configured keyword set, and/or determining whether the information contents contain a keyword in a server-configured keyword set, and/or determining whether the sender number is a number outside the locally-configured number set and the server-configured number set.

In addition, the above described locally-configured number set in the blocking mode may be a blacklist, a whitelist or a blocking keyword configured by the user. A number in the blacklist or the whitelist may be any one of: a complete number (i.e., a complete mobile number, a landline number or a service number of an operator) added by the user, an area configured by the user according to a number subscribed location, a number segment added by the user. The blacklist is a list of numbers to be blocked. The whitelist is a list of numbers allowed to access. The area configured by the user according to the number subscribed location may be a code number configured according to codes of telephone numbers, or may be an area configured by an operator according to number subscribed locations. The number segment added by the user may be first few numbers of a short message number. Through adding the first few numbers into the blacklist, it is possible to block a short message port of a company according to the first few numbers. The blocking keyword configured by the user may be characteristic characters of a website address, used for analyzing a short message, a multimedia message or a wappush message.

The locally-configured number set in the blocking mode may also include contents related to a rule configured by the terminal, including: numbers in a contact list, numbers in an outgoing number list, sender numbers and keywords returned by a server after analyzing information reported by the user, and strange numbers. Different rules may include different contents and correspond to different processing manners. Strange numbers include numbers in a contact list saved in the terminal or a contact list saved in a subscriber identity module (SIM) card, numbers in the outgoing number list, numbers of short messages in a short message inbox, the server-configured number set and keywords in the server-configured keyword set. The server-configured number set and the server-configured keyword set are characteristic items returned to the terminal by the server after analyzing information reported by the user. The characteristic item may include a sender number and a keyword in information contents. The characteristic items are sender numbers and keywords obtained by the server after analyzing the information reported by the user. Each sender number and each keyword respectively corresponds to one weight. If a sender number and a keyword match with the characteristic items, a total weight of all characteristic items matching with the sender number and the keyword is calculated and compared with a predefined threshold. If the total weight exceeds the predefined threshold, the information is required to be processed.

Since different blocking modes include different contents, the processing rules corresponding to different blocking modes may also be different. After one piece of information is blocked, different processing results of the information may be obtained based on different scanning orders of the blocking modes.

For example, one number is in both the contact list and the outgoing number list. But processing rules corresponding to the two blocking modes are different. One processing rule is to block the number in the contact list, whereas the other processing rule is not to block the number in the outgoing number list. If combined rules of the two blocking modes are different, there may be different blocking effects to this number. For example, the combined rule of the two blocking modes may include: search the contact list for the number firstly. If the number is found in the contact list, a posterior blocking mode is not applied. The combined rule of the two blocking modes may also include: search the outgoing number list for the number firstly. If the number is found in the outgoing number list, a posterior blocking mode is not applied. If the first combined rule is adopted, the contacts list is searched for the number firstly. If the number is found in the contact list, the information transmitted by this number is blocked. If the second combined rule is adopted, the outgoing number list is searched for the number firstly. If the number is found in the outgoing number list, the information transmitted by this number is not blocked and is displayed to the user. After the number is found, the posterior blocking mode is not utilized any more. Thus, with different combined rules of the blocking modes, the blocking effects may be different. Therefore, the combined rule of various blocking modes configured by the user needs to be obtained.

Therefore, process 202 may include at least one of the following:
2021, determining whether the sender number is in the locally-configured number set;
2022, determining whether the information contents contain a keyword in the locally-configured keyword set;
2023, determining whether the sender number is in the server-configured number set, and/or whether the information contents contain a keyword in the server-configured keyword set; and
2024, determining whether the sender number is a number outside the locally-configured number set and the server-configured number set.

Furthermore, it is determined whether the information matches with a blocking mode in the combination of the predefined blocking modes according to a locally-configured order. The determination ends after the matching operation succeeds or all blocking modes have been processed but the matching operation fails. The user may select one or multiple blocking modes for the blocking according to his requirement. The applying order of the selected blocking modes may be different, i.e., with different scanning orders of the blocking modes to the information, the blocking effects are different. In this embodiment, the sequence of the blocking modes may be configured locally. When block operation is performed to the information, the blocking modes are applied to the information according to the configured sequence. If the information matches with one blocking mode, the matching operation ends and the information is processed according to the blocking mode, i.e., blocking the information or unblocking the information. If the information does not match with any blocking mode, the information is displayed normally.

Hereinafter, the matching operations of various blocking modes are described. In a practical application, it is not restricted to the following sequence. This embodiment may also be implemented following a sequence different from the following.

If process 202 is 2021 which includes determining whether the sender number is in the locally-configured number set, the determination of whether the sender number is in the locally-configured number set includes one or more of the following three blocking modes.

A first blocking mode:
determining whether the sender number is in a locally configured blacklist and/or whitelist;
the number in the blacklist and whitelist is a complete number added by the user, or a certain area configured by the user according to the number subscribed location or a number segment added by the user. The blacklist is a list of numbers to be blocked. The whitelist is a list of numbers allowed to access.

A second blocking mode:
determining whether the sender number is in a contact list saved in the terminal and/or a contact list saved in the SIM card.

A third blocking mode:
determining whether the sender number is in a locally stored outgoing number list.

If process 202 is 2023 which includes determining whether the sender number is in the server-configured number set and/or whether the information contents contain a keyword in the server-configured keyword set, the process of determining whether the sender number is in the server-configured number set and/or whether the information contents contain a keyword in the server-configured keyword set includes:
if the sender number is in the server-configured number set, and/or the information contents contain a keyword in the server-configured keyword set, respectively obtaining a weight of the sender number and/or a weight of the keyword;
calculating a total weight of the information according to the weight of the sender number and/or a weight of the information contents;
if the total weight exceeds a predefined threshold, determining that the information matches with the predefined blocking mode.

In other words, the above process 203 includes the following three cases.

In a first case, if the sender number is in the server-configured number set, and the information contents contain a keyword in the server-configured keyword set, the weight of the sender number and the weight of the keyword are obtained respectively, the total weight of the information is calculated according to the weight of the sender number and the weight of the information contents. If the total weight exceeds the predefined threshold, it is determined that the information matches with the predefined blocking mode.

In a second case, if the sender number is in the server-configured number set, the weight of the sender number is obtained and a total weight of the information is calculated according to the weight of the sender number. If the total weight exceeds the predefined threshold, it is determined that the information matches with the predefined blocking mode.

In a third case, if the information contents contain a keyword in the server-configured keyword set, the weight of each keyword is obtained respectively. A total weight of the information is calculated according to the weight of the information contents. If the total weight exceeds the predefined threshold, it is determined that the information matches with the predefined blocking mode.

If the process 202 is 2022 which includes determining whether the information contents contain a keyword in a locally-configured keyword set, the process of determining whether the information contents contain a keyword in a locally-configured keyword set includes:
if the information contents include a keyword in the locally-configured keyword set, obtaining a weight of the keyword;
calculating a weight of the information according to a weight of the information contents; and
if the weight of information exceeds a predefined threshold, determining that the information matches with the predefined blocking mode.

This manner is to determine whether the information contains a locally-configured keyword, i.e., a keyword configured by the user or preconfigured in the terminal.

If process 202 is 2024 which includes determining whether the sender number is outside the locally-configured number set and the server-configured number set, in this manner, the sender number is a number not belonging to the locally-configured number set and the server-configured number set.

At process 203, if the information matches with one blocking mode, the information is processed according to a processing rule corresponding to the blocking mode.

Different blocking modes may correspond to different processing rules, e.g., block or unblock.

Therefore, process 203 may specifically include:
2031, if the processing rule corresponding to the blocking mode is block, the information is blocked; and
2032, if the processing rule corresponding to the blocking mode is unblock, the information is displayed.

A detailed configuration may include: the processing rule corresponding to the blacklist configured by the user may include block or unblock, the processing rule corresponding to the keyword configured by the user may include block or unblock; the processing rule corresponding to the whitelist configured by the user may include accept or unblock; the processing rule corresponding to the contact list may include accept or block or unblock; the processing rule corresponding to the outgoing number list may include block or unblock; the processing rule corresponding to the sender number and keyword returned by the server after analyzing information reported by the user may include enable or disable. A corresponding implementation includes: if the function is enabled, the information with sender number or keyword matches with the blocking mode is blocked. If the function is disabled, the information with sender number or keyword matches with the blocking mode is unblocked. The processing rule corresponding to the strange number includes block or unblock.

Furthermore, the user may configure the processing rules to be block, unblock or no processing for different blocking modes according to a current requirement. Through the configuration of different processing rules, the information is filtered by multiple blocking modes and the blocking ratio is increased to the largest extent. If the information matches with one predefined blocking mode, the processing rule corresponding to the matching blocking mode, i.e., the processing manner corresponding to the processing rule configured by the user, is obtained and the information is processed.

The embodiment of the present disclosure compares the sender number and/or contents of the information with predefined blocking modes, which is not restricted to the existing blocking manner in which merely numbers in the blacklist are blocked. The accuracy ratio and efficiency of the blocking are increased and the user's experience is improved.

### Embodiment 3

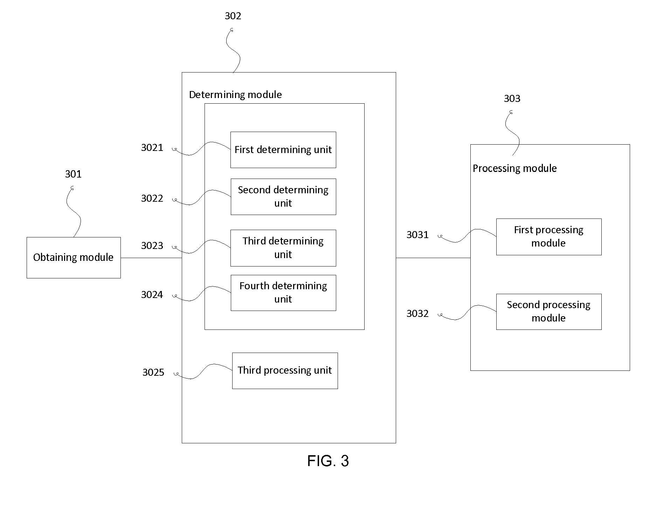

As shown in FIG. 3, an embodiment of the present disclosure provides a terminal for processing information. The terminal includes:
a receiving module 301, adapted to receive information, wherein the information has at least a sender number and/or information contents;
a determining module 302, adapted to determine whether the information matches with one blocking mode of a combination of predefined blocking modes; and
a processing module 303, adapted to process, if the information matches with one of the combination of predefined blocking modes, the information according to a processing rule corresponding to the blocking mode.

In a practical implementation, the determining module 302 includes at least one of:
a first determining unit 3021, adapted to determine whether the sender number is in a locally-configured number set;
a second determining unit 3022, adapted to determine whether the information contents contain a keyword in a locally-configured keyword set;
a third determining unit 3023, adapted to determine whether the sender number is in a server-configured number set, and/or whether the information contents contain a keyword in a server-configured keyword set; and
a fourth determining unit 3024, adapted to determine whether the sender number is outside the locally-configured number set and the server-configured number set.

The determining module 302 may further include:
a third processing unit 3025, adapted to compare the information with the blocking modes in the combination according to a predefined sequence until it is determined that the information matches with one blocking mode or it is determined that the information does not match any one of the blocking modes.

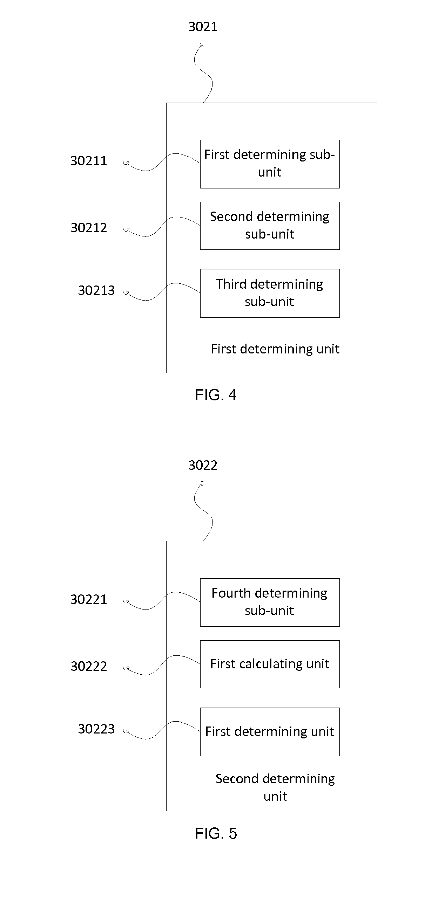

As shown in FIG. 4, the first determining unit 3021 includes:
a first determining sub-unit 30211, adapted to determine whether the sender number is in a locally-configured blacklist and/or whitelist;
the number in the blacklist and whitelist is a complete number added by the user, or a certain area configured by the user according to a number subscribed location or a number segment added by the user; the blacklist is a list of numbers to be blocked; the whitelist is a list of numbers allowed to access;
and/or, a second determining sub-unit 30212, adapted to determine whether the sender number is in a contact list saved in the terminal and/or a contact list saved in a SIM card;
and/or, a third determining sub-unit 30213, adapted to determine whether the sender number is in a locally stored outgoing number list.

As shown in FIG. 5, the second determining unit 3022 includes:
a fourth determining sub-unit 30221, adapted to obtain, if the information contents contains a keyword in a locally-configured keyword set, a weight of the keyword;
a first calculating unit 30222, adapted to calculate a weight of the information according to a weight of the information contents; and
a first determining unit 30223, adapted to determine that the information matches with the predefined blocking mode if the weight of the information exceeds a predefined threshold.

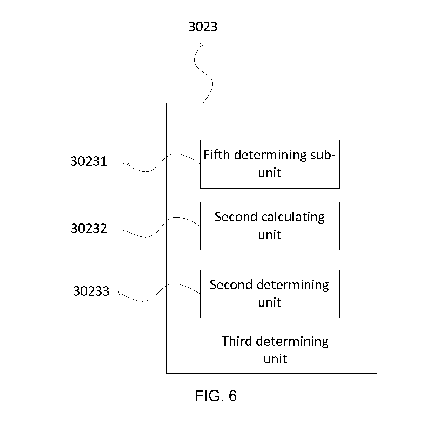

As shown in FIG. 6, the third determining unit 3023 includes:
a fifth determining sub-unit 30231, adapted to respectively obtain, if the sender number is in the server-configured number set and/or the information contents contain a keyword in the server-configured keyword set, a weight of the sender number and a weight of the keyword;
a second calculating unit 30232, adapted to calculate a total weight of the information according to the weight of the sender number and/or a weight of the information contents; and
a second determining unit 30233, adapted to determine that the information matches with the blocking mode if the total weight exceeds the predefined threshold.

The processing module 303 includes:
a first processing unit 3031, adapted to block the information if the processing rule corresponding to the blocking mode is block; and
a second processing unit 3032, adapted to display the information if the processing rule corresponding to the blocking mode is unblock.

The embodiment of the present disclosure compares the sender number and/or contents of the information with predefined blocking modes, which is not restricted to the existing blocking manner in which merely numbers in the blacklist are blocked. The accuracy ratio and efficiency of the blocking are increased and the user's experience is improved.

Those with ordinary skill in the art would know that all or some of the processes of the present disclosure may be implemented by hardware, or implemented by a program executed on a relevant hardware. The program may be stored on a computer readable storage medium. The storage medium may be a read only memory, a disk or a compact disk.

What has been described and illustrated herein is a preferred embodiment of the disclosure along with some of its variations. Many variations are possible within the scope of the disclosure, which is intended to be defined by the following claims -- and their equivalents -- in which all terms are meant in their broadest reasonable sense unless otherwise indicated.

## Claims

1. A method for processing contacts, comprising:
receiving information, wherein the information has at least a sender number and/or information contents;
determining whether the information matches with one blocking mode of a combination of predefined blocking modes; and
if the information matches with one blocking mode, processing the information according to a processing rule corresponding to the blocking mode.

2. The method of claim 1, wherein the determining whether the information matches with one blocking mode of the combination of predefined blocking modes comprises at least one of:
determining whether the sender number is in a locally-configured number set;
determining whether the information contents contain a keyword in a locally-configured keyword set;
determining whether the sender number is in a server-configured number set, and/or whether the information contents contain a keyword in a server-configured keyword set; and
determining whether the sender number is outside the locally-configured number set and the server-configured number set.

3. The method of claim 2, wherein the determining whether the sender number is in the locally-configured number set comprises:
determining whether the sender number is in a locally-configured blacklist and/or whitelist;
wherein a number in the blacklist and whitelist is a complete number added by a user, or an area configured by the user according to a number subscribed location, or a number segment added by the user; the blacklist is a list of numbers to be blocked, the whitelist is a list of numbers allowed to access.

4. The method of claim 2 or 3, wherein the determining whether the sender number is in the locally-configured number set comprises:
determining whether the sender number is a contact list saved locally or in a contact list saved in a subscriber identity module (SIM) card.

5. The method of claim 4, wherein the determining whether the sender number is in the locally-configured number set comprises:
determining whether the sender number is in an outgoing list locally saved.

6. The method of claim 4, wherein the determining whether the information contents contain the keyword in the locally-configured keyword set comprises:
if the information contents contain the keyword in the locally-configured keyword set, obtaining a weight of the keyword;
calculating a weight of the information according to a weight of the information contents;
if the weight of the information exceeds a predefined threshold, determining that the information matches with the predefined blocking mode.

7. The method of claim 4, wherein the determining whether the sender number is in the server-configured number set, and/or whether the information contents contain the keyword in the server-configured keyword set comprises:
if the sender number is in the server-configured number set, and/or the information contents contain a keyword in the server-configured keyword set, respectively obtaining a weight of the sender number and a weight of the keyword;
calculating a total weight of the information according to the weight of the sender number and a weight of the information contents; and
if the total weight exceeds a predefined threshold, determining that the information matches with the predefined blocking mode.

8. The method of claim 4, wherein the processing the information according to the processing rule corresponding to the blocking mode comprises:
if the processing rule corresponding to the blocking mode is block, blocking the information; and
if the processing rule corresponding to the blocking mode is unblock, displaying the information.

9. The method of claim 4, wherein the determining whether the information matches with one blocking mode of the combination of predefined blocking modes comprises:
comparing the information with the predefined blocking modes in the combination in turn according to a predefined order, until the information matches with one blocking mode or the information does not match with any one of the blocking modes.

10. A terminal for processing information, comprising:
a receiving module, adapted to receive information, wherein the information has at least a sender number and/or information contents;
a determining module, adapted to determine whether the information matches with one blocking mode of a combination of predefined blocking modes; and
a processing module, adapted to process, if the information matches with one blocking mode, the information according to a processing rule corresponding to the blocking mode.

11. The terminal of claim 10, wherein the determining module comprises at least one of:
a first determining unit, adapted to determine whether the sender number is in a locally-configured number set;
a second determining unit, adapted to determine whether the information contents contain a keyword in a locally-configured keyword set;
a third determining unit, adapted to determine whether the sender number is in a server-configured number set, and/or whether the information contents contain a keyword in a server-configured keyword set; and
a fourth determining unit, adapted to determine whether the sender number is outside of the locally-configured number set and the server-configured number set.

12. The terminal of claim 11, wherein the first determining unit comprises:
a first determining sub-unit, adapted to determine whether the sender number is in a locally-configured blacklist and/or whitelist;
wherein a number in the blacklist and whitelist is a complete number added by a user, or an area configured by the user according to a number subscribed location, or a number segment added by the user; the blacklist is a list of number to be blocked, the whitelist is a list of numbers allowed to access.

13. The terminal of claim 11 or 12, wherein the first determining unit comprises:
a second determining sub-unit, adapted to determine whether the sender number is in a contact list saved in the terminal and/or a contact list saved in a subscriber identity module (SIM) card.

14. The terminal of claim 13, wherein the first determining unit comprises:
a third determining sub-unit, adapted to determine whether the sender number is in a locally saved outgoing list.

15. The terminal of claim 13, wherein the second determining unit comprises:
a fourth determining sub-unit, adapted to obtain, if the information contents contain a keyword in the locally-configured keyword set, a weight of the keyword;
a first calculating unit, adapted to calculate a weight of the information according to a weight of the information contents; and
a first determining unit, adapted to determine that the information matches with the predefined blocking mode if the weight of the information exceeds a predefined threshold.

16. The terminal of claim 13, wherein the third determining unit comprises:
a fifth determining sub-unit, adapted to respectively obtain, if the sender number is in the server-configured number set, and/or the information contents contain a keyword in the server-configured keyword set, a weight of the sender number and/or a weight of the keyword;
a second calculating unit, adapted to calculate a total weight of the information according to the weight of the sender number and a weight of the information contents; and
a second determining unit, adapted to determine that the information matches with the predefined blocking mode if the total weight exceeds a predefined threshold.

17. The terminal of claim 13, wherein the processing module comprises:
a first processing unit, adapted to block the information if the processing rule corresponding to the blocking mode is block; and
a second processing unit, adapted to display the information if the processing rule corresponding to the blocking mode is unblock.

18. The terminal of claim 13, further comprising:
a third processing unit, adapted to compare the information with the predefined blocking modes in the combination in turn according to a predefined order, until the information matches with one blocking mode or the information does not match with any one of the blocking modes.
